# EUROPEAN PATENT APPLICATION

(11) **EP 4 597 171 A1**
(43) Date of publication of application: **06.08.2025**
(21) Application number: 23871970.2
(22) Date of filing: 14.09.2023
(51) Int. Cl.: G01T 1/24

(54) **RADIATION DETECTION ELEMENT, RADIATION DETECTOR, AND RADIATION DETECTION DEVICE**

(30) Priority: 29.09.2022 JP 2022156683
(71) Applicant: HORIBA, Ltd., Minami-ku Kyoto-shi Kyoto 601-8510 (JP)
(72) Inventor: ISHIKURA, Koji, Kyoto-shi, Kyoto 601-8510 (JP); OKUBO, Yuji, Kyoto-shi, Kyoto 601-8510 (JP); MATSUNAGA, Daisuke, Kyoto-shi, Kyoto 601-8510 (JP)
(74) Representative: Isarpatent
(86) International application number: PCT/JP2023/033568
(87) International publication number: WO 2024/070737

(57) **Abstract**

Provided are a radiation detection element, a radiation detector, and a radiation detection apparatus capable of increasing a sensitive region.

A radiation detection element including a semiconductor portion having an incident surface onto which radiation is incident, a first electrode which is provided on a rear surface of the incident surface and into which electric charges generated in the semiconductor portion by incidence of radiation flow, and a second electrode provided on the incident surface, located on a rear side of the first electrode, and being applied a voltage required for causing the electric charges to flow into the first electrode includes a third electrode provided on the incident surface and disposed at a position surrounding the second electrode, wherein the third electrode is electrically connected to the second electrode, and a voltage is applied to the second electrode and the third electrode so that a potential changes from the third electrode to the second electrode.

## Description

### Technical Field

The present invention relates to a radiation detection element, a radiation detector, and a radiation detection apparatus.

### Background Art

Some radiation detectors that detect radiation such as X-rays each include a radiation detection element using a semiconductor. The radiation detection element using the semiconductor includes a flat plate-shaped semiconductor portion. A signal output electrode for outputting a signal is provided on one surface of the semiconductor portion, and an electrode for applying voltage is provided on the other surface. When a voltage is applied, an electric field is generated inside the semiconductor portion. When radiation is incident on the semiconductor portion, electric charges are generated inside the semiconductor portion, the electric charges move along by the electric field and are gathered at the signal output electrode, and a signal according to the quantity of gathered electric charges is output from the signal output electrode. The radiation is counted according to the output of the signal. Some conventional radiation detection elements each include a plurality of signal output electrodes. For example, a radiation detection element in which the plurality of signal output electrodes is two-dimensionally arranged on one surface of a plate-shaped semiconductor has been used. Patent Literature 1 discloses an example of the radiation detection element.

The electric field is weaker in a part of the semiconductor portion far from the signal output electrode, and when radiation is incident on this part, electric charges are less likely to gather at the signal output electrode, resulting in deterioration in radiation detection accuracy. For example, the electric field is weaker at a peripheral part of the radiation detection element or at a part located between the plurality of signal output electrodes. In Patent Literature 1, a barrier electrode is provided on the outside of the electrode for applying voltage, and a potential difference is generated between the electrode and the barrier electrode, making it easier for electric charges to gather at the signal output electrode. However, in a state in which the electrode and the barrier electrode are insulated from each other, when a potential difference between the electrode and the barrier electrode is increased, the potential difference becomes unstable. For this reason, the potential difference cannot be sufficiently increased, and there is a limit in making it easier to gather the electric charges. Conventionally, a collimator has been used to cover a part where the generated electric charges are less likely to be gathered in the signal output electrode. The collimator prevents incidence of radiation on a part where the electric field is weak.

### Citation List

### Patent Literature:

Patent Literature 1: Specification of U.S. Patent No. 7,105,827

### Summary

### Technical Problems

A part of the radiation detection element not covered by the collimator is a sensitive region capable of detecting radiation. In order to improve efficiency of radiation detection, it is necessary to enlarge the sensitive region.

The invention has been made in view of the above circumstances, and an object of the invention is to provide a radiation detection element, a radiation detector, and a radiation detection apparatus capable of enlarging the sensitive region.

### Solution to Problems

A radiation detection element according to one aspect of the present invention, including a semiconductor portion having an incident surface onto which radiation is incident, a first electrode which is provided on a rear surface of the incident surface and into which electric charges generated in the semiconductor portion by incidence of radiation flow, and a second electrode provided on the incident surface, located on a rear side of the first electrode, and being applied a voltage required for causing the electric charges to flow into the first electrode, is characterized by comprising: a third electrode provided on the incident surface and disposed at a position surrounding the second electrode, wherein the third electrode is electrically connected to the second electrode, and a voltage is applied to the second electrode and the third electrode so that a potential changes from the third electrode to the second electrode.

In the aspect of the invention, the radiation detection element includes the first electrode into which electric charges generated by incidence of radiation flow, and the second electrode which is located on a rear side of the first electrode and to which a voltage for electric charge transfer is applied. The third electrode is disposed at a position surrounding the second electrode, and a voltage is applied to the second electrode and the third electrode so that a potential changes from the third electrode toward the second electrode. An electric field in which a potential changes from the third electrode toward the second electrode is generated near the incident surface, and electric charges generated by incidence of radiation are moved by the electric field to a center of the second electrode and flow into the first electrode. For this reason, electric charges generated near a periphery of the second electrode are easily gathered at the first electrode. Even at a position where electrons generated by radiation are difficult to gather at the first electrode in the past, the generated electrons can be easily gathered at the first electrode.

In the radiation detection element according one aspect of the present invention, it is characterized in that a plurality of third electrodes is provided, the plurality of third electrodes is electrically connected to each other and are spaced from the second electrode at mutually different distances, and a voltage is applied to the second electrode and the plurality of third electrodes so that a potential monotonically changes from an outermost third electrode among the plurality of third electrodes toward the second electrode.

In the aspect of the invention, the radiation detection element includes a plurality of third electrodes, and a voltage is applied to the second electrode and the third electrodes so that a potential monotonically changes from the outermost third electrode toward the second electrode. An electric field is generated so that a potential changes from the outer third electrode toward the second electrode. By using the plurality of third electrodes, a potential difference between the outer third electrode and the second electrode can be increased. For this reason, the electric field makes it easier for electric charges to move toward the center of the second electrode and to gather at the first electrode.

In the radiation detection element according one aspect of the present invention, it is characterized in that a plurality of sets of the second electrode and the third electrode is provided, and the plurality of sets of the second electrode and the third electrode is two-dimensionally arranged.

In the aspect of the invention, the radiation detection element includes a plurality of sets of the second electrode and the third electrode. By performing radiation detection using the plurality of sets of the second electrode and the third electrode, radiation can be detected at a high counting rate.

The radiation detection element according one aspect of the present invention is characterized by further comprising a plurality of fourth electrodes provided on the rear surface of the incident surface, disposed at positions surrounding the first electrode, and spaced at mutually different distances from the first electrode, wherein a voltage is applied to the plurality of fourth electrodes so that a potential monotonically increases from an outermost fourth electrode to an innermost fourth electrode, and a voltage is applied to the second electrode and the third electrode so that potentials of the second electrode and the third electrode are higher than a potential of the outermost fourth electrode and lower than a potential of the innermost fourth electrode.

In the aspect of the invention, the plurality of fourth electrodes is disposed at positions surrounding the first electrode, and a voltage is applied to the plurality of fourth electrodes so that a potential monotonically increases from the outermost fourth electrode to the innermost fourth electrode. In addition, potentials of the second electrode and the third electrode are higher than a potential of the outermost fourth electrode and lower than a potential of the innermost fourth electrode. Electrons generated in response to incidence of radiation are easily moved inside the semiconductor portion toward the first electrode by the generated electric field, and the electrons easily flow into the first electrode.

A radiation detector according one aspect of the present invention is characterized by comprising: the radiation detection element according to one aspect of the present invention; and a collimator configured to shield radiation, wherein the collimator is disposed to cover a third electrode included in the radiation detection element and not to cover at least a part of a second electrode included in the radiation detection element.

In the aspect of the invention, the radiation detector is equipped with the collimator, and the collimator covers the third electrode. Since the third electrode is far from the first electrode, when radiation is incident near the third electrode, generated electric charges are unlikely to gather at the first electrode. The collimator prevents radiation from being incident near the third electrode, and eliminates difficulty in gathering of the electric charges at the first electrode.

A radiation detection apparatus according one aspect of the present invention is characterized by comprising: a radiation portion configured to radiate radiation onto a sample; the radiation detector according to one aspect of the present invention; a spectrum generator configured to generate a spectrum of radiation detected by the radiation detector; and a display unit configured to display a spectrum generated by the spectrum generator.

In the aspect of the invention, the radiation detection apparatus radiates radiation onto the sample, generates a spectrum of radiation generated from the sample, and displays the generated spectrum on the display unit. A user can check the spectrum of the radiation generated from the sample.

### Advantageous Effects of Invention

In the invention, a part that could not be used as a sensitive region in the past can be used as a sensitive region. Therefore, the invention has excellent effects such as making it possible to enlarge the sensitive region.

### Brief Description of Drawings

FIG. 1 is a schematic cross-sectional view illustrating an example of a radiation detection element according to Embodiment 1.
FIG. 2 is a schematic plan view of the radiation detection element according to Embodiment 1 as viewed from an incident surface side.
FIG. 3 is a schematic plan view of the radiation detection element according to Embodiment 1 as viewed from an electrode surface side.
FIG. 4 is a block diagram illustrating a functional configuration example of a radiation detection apparatus using the radiation detection element.
FIG. 5 is a schematic diagram illustrating a connection mode between the radiation detection element and a voltage applier according to Embodiment 1.
FIG. 6 is a schematic cross-sectional view illustrating a configuration example of a radiation detector according to Embodiment 1.
FIG. 7 is a schematic cross-sectional view illustrating an example of the radiation detection element and a collimator according to Embodiment 1.
FIG. 8 is a schematic cross-sectional view illustrating an example of a radiation detection element and a collimator according to Embodiment 2 and a connection mode of the radiation detection element and a voltage applier.

### Description of Embodiments

The invention will now be described in detail with reference to the drawings illustrating embodiments thereof.

### <Embodiment 1>

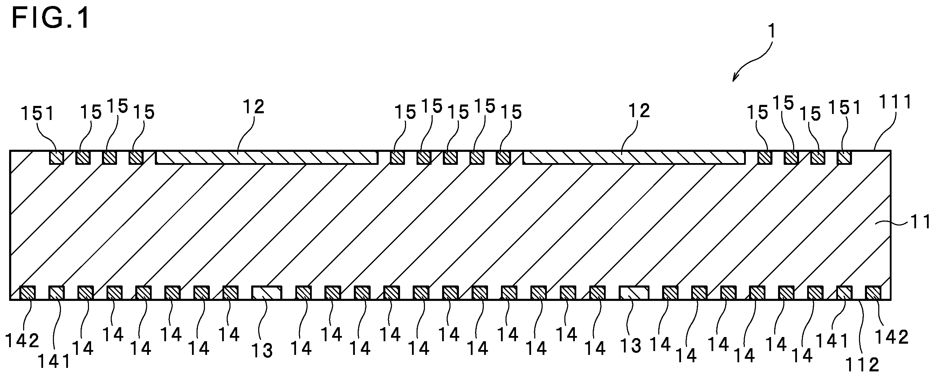

FIG. 1 is a schematic cross-sectional view illustrating an example of a radiation detection element 1 according to Embodiment 1. The radiation detection element 1 is a silicon drift type radiation detection element. The radiation detection element 1 has a flat plate shape as a whole. The radiation detection element 1 has a disk-shaped semiconductor portion 11 made of Si (silicon). A component of the semiconductor portion 11 is n-type Si. The radiation detection element 1 has an incident surface 111 located on an incident side where radiation to be detected is incident, and an electrode surface 112 located on a back side of the incident surface 111.

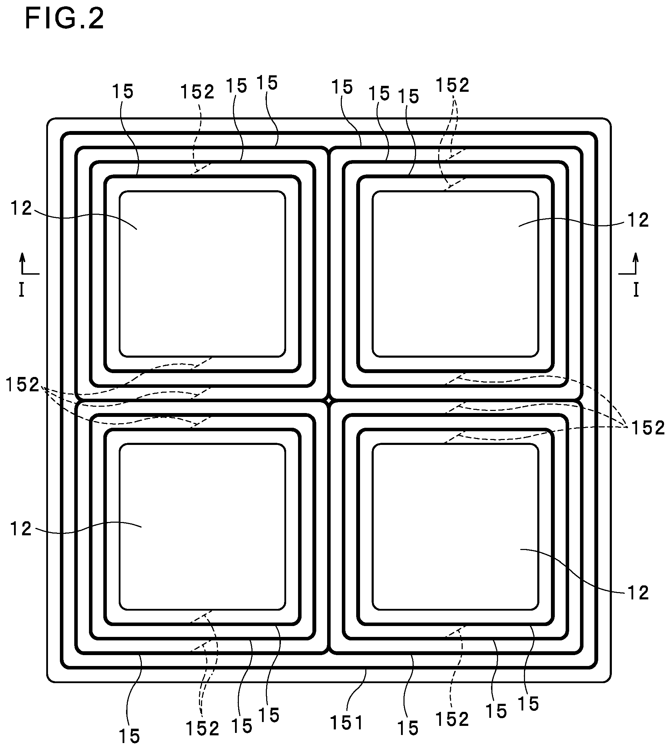

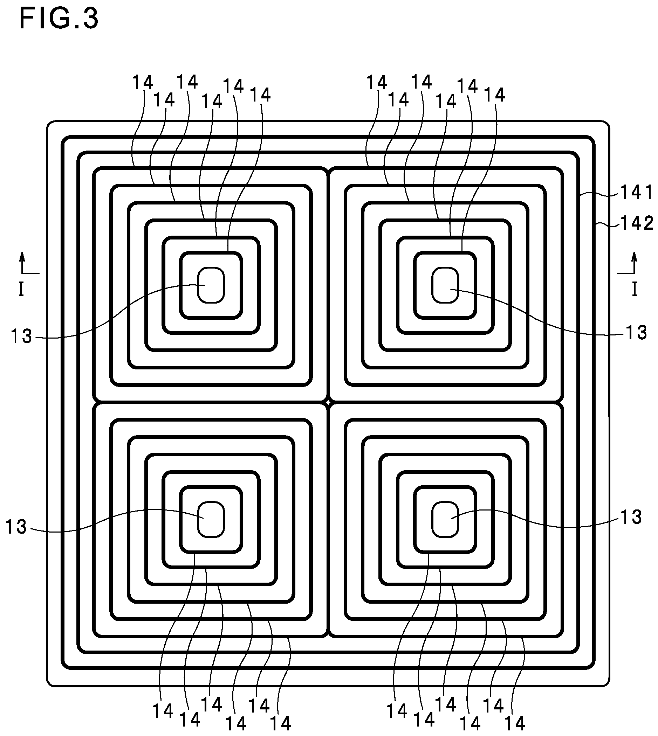

FIG. 2 is a schematic plan view of the radiation detection element 1 according to Embodiment 1 as viewed from the incident surface 111 side. FIG. 3 is a schematic plan view of the radiation detection element 1 according to Embodiment 1 as viewed from the electrode surface 112 side. FIG. 1 illustrates a cross-sectional view of the radiation detection element 1 taken along line I-I of FIG. 2 and FIG. 3.

The electrode surface 112 is provided with a plurality of signal output electrodes 13 that are electrodes configured to output signals during radiation detection. The signal output electrodes 13 correspond to first electrodes. A component of each of the signal output electrodes 13 is Si of the same type as that of the semiconductor portion 11. For example, the component of the signal output electrode 13 is n + Si in which a specific dopant such as phosphorus is doped into Si. FIG. 3 illustrates an example in which four signal output electrodes 13 are provided. The plurality of signal output electrodes 13 are spaced apart from each other and two-dimensionally arranged.

The electrode surface 112 is provided with a plurality of curved electrodes 14 in a multiple ring shape at positions surrounding each of the signal output electrodes 13. The curved electrodes 14 correspond to fourth electrodes. A component of each of the curved electrodes 14 is a semiconductor of a different type from that of the semiconductor portion 11, and is p-type Si in which a specific dopant such as boron is doped into Si. For example, the component of the curved electrode 14 is p + Si. The signal output electrode 13 is located approximately at a center of the plurality of curved electrodes 14 in a multiple ring shape. Distance between the signal output electrode 13 and the respective curved electrodes 14 surrounding the signal output electrode 13 are different. Note that a shape of the curved electrode 14 may be a shape in which a part of a ring is missing.

The electrode surface 112 is provided with a plurality of sets of a signal output electrode 13 and a plurality of curved electrodes 14 surrounding the signal output electrode 13. The plurality of sets of the signal output electrode 13 and the plurality of curved electrodes 14 are two-dimensionally arranged. An outermost curved electrode 14 among the plurality of curved electrodes 14 surrounding each signal output electrode 13 (that is, a curved electrode 14 at a greatest distance from each signal output electrode 13) shares a portion with an outermost curved electrode 14 among a plurality of curved electrodes 14 included in another set. The curved electrodes 14 may not have a shared portion. Even though an example in which six curved electrodes 14 are included in each set is illustrated in FIG. 1 and FIG. 3, the number of the plurality of curved electrodes 14 included in each set may be more than six or less than six.

The electrode surface 112 is provided with an annular guard electrode 141 and an annular ground electrode 142. The guard electrode 141 is disposed at a position collectively surrounding a plurality of sets of the signal output electrode 13 and the plurality of curved electrodes 14. The ground electrode 142 is disposed outside the guard electrode 141. The ground electrode 142 is connected to a ground potential. A potential of the guard electrode 141 is a floating potential. The guard electrode 141 prevents dielectric breakdown between the curved electrode 14 and the ground electrode 142. Even though a single guard electrode 141 is illustrated in FIG. 1 and FIG. 3, a plurality of guard electrodes 141 in multiple annular shapes is actually provided. The signal output electrodes 13, the curved electrodes 14, the guard electrode 141, and the ground electrode 142 are formed by doping a part of the semiconductor portion 11 with dopants.

The incident surface 111 is provided with a plurality of counter electrodes 12, which are electrodes to which a voltage is applied. The counter electrodes 12 correspond to second electrodes. The counter electrodes 12 are doped with a dopant that makes Si a semiconductor of a different type from that of the component of the semiconductor portion 11. A component of each of the counter electrodes 12 is p-type Si in which a specific dopant such as boron is doped into Si, for example, p + Si. Each counter electrode 12 is disposed at a position on the back side of each signal output electrode 13. That is, the same number of counter electrodes 12 as the number of signal output electrodes 13 are provided. The plurality of counter electrodes 12 are spaced apart from each other and two-dimensionally arranged. The area of the counter electrodes 12 along the incident surface 111 is larger than the area of the signal output electrodes 13 along the electrode surface 112. The counter electrodes 12 are provided in most of the area of the incident surface 111.

The incident surface 111 is provided with a plurality of drift electrodes 15 in a multiple annular shape at positions surrounding each counter electrode 12. The drift electrodes 15 correspond to third electrodes. A component of each of the drift electrodes 15 is made of the same type of semiconductor as that of the counter electrodes 12. Distances between the counter electrode 12 and the respective drift electrodes 15 surrounding the counter electrode 12 are different.

The incident surface 111 is provided with a plurality of sets of a counter electrode 12 and a plurality of drift electrodes 15 surrounding the counter electrode 12. The plurality of sets of the counter electrode 12 and the plurality of drift electrodes 15 are two-dimensionally arranged. An outermost drift electrode 15 among the plurality of drift electrodes 15 surrounding each counter electrode 12 (that is, a drift electrode 15 located at a greatest distance from each counter electrode 12) shares a portion with an outermost drift electrode 15 among a plurality of drift electrodes 15 included in another set. The drift electrode 15 does not need to have a shared portion. Even though an example in which three drift electrodes 15 are included in each set is illustrated in FIG. 1 and FIG. 2, the number of the plurality of drift electrodes 15 included in each set may be less than two or more than three.

The incident surface 111 is provided with an annular guard electrode 151. The guard electrode 151 is disposed at a position collectively surrounding a plurality of sets of the counter electrode 12 and the drift electrodes 15. A potential of the guard electrode 151 is a floating potential. Even though a single guard electrode 151 is illustrated in FIG. 1 and FIG. 2, a plurality of guard electrodes 151 in multiple annular shapes is actually provided. The guard electrode 151 prevents dielectric breakdown between an edge of the semiconductor portion 11 and the drift electrode 15. The counter electrodes 12, the drift electrodes 15, and the guard electrode 151 are formed by doping a part of the semiconductor portion 11 with dopants.

Note that the radiation detection element 1 may have a configuration in which the ground electrode 142 is not provided on the electrode surface 112 side, but is provided on the incident surface 111 side. That is, the ground electrode 142 may not be provided, and a ground electrode may be provided outside the guard electrode 151. In this configuration, the guard electrode 151 prevents dielectric breakdown between the drift electrode 15 and the ground electrode. The radiation detection element 1 may have a configuration in which ground electrodes are provided on both the incident surface 111 and the electrode surface 112.

Radiation such as X-rays, photons in general (including UV and visible light), electron beams, or other charged particle beams is incident on the radiation detection element 1. The radiation is absorbed in the semiconductor portion 11, and electric charges, a quantity of which corresponds to energy of the absorbed radiation, is generated in the semiconductor portion 11. The generated electric charges are electrons and holes. The generated electric charges move due to an electric field inside the semiconductor portion 11, and one type of electric charges is concentrated and flows into the signal output electrode 13. In this embodiment, electrons generated by incidence of radiation move and flow into the signal output electrode 13. The signal output electrode 13 outputs a current signal corresponding to the flowed-in electric charges, that is, a current signal corresponding to energy of the radiation.

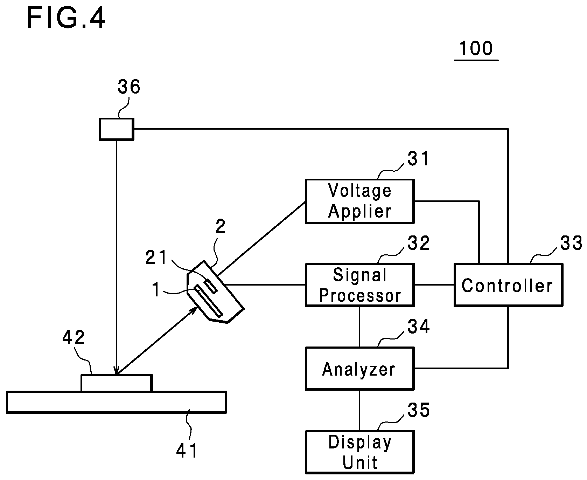

FIG. 4 is a block diagram illustrating a functional configuration example of a radiation detection apparatus 100 using the radiation detection element 1. The radiation detection apparatus 100 is, for example, an X-ray fluorescence analyzer. The radiation detection apparatus 100 includes a radiation portion 36 that radiates radiation such as an electron beam or X-rays to a sample 42, a sample stage 41 on which the sample 42 is placed, and a radiation detector 2. The radiation detection apparatus 100 may be configured to hold the sample 42 using a method other than placing the sample on the sample stage 41. The radiation detector 2 includes a radiation detection element 1 and a preamplifier 21.

The signal output electrode 13 of the radiation detection element 1 is connected to the preamplifier 21. A plurality of signal output electrodes 13 may be connected to one preamplifier 21. A plurality of preamplifiers 21 may be included in the radiation detector 2, and the signal output electrodes 13 and the preamplifiers 21 may be connected one-to-one. The preamplifier 21 outputs a signal having intensity according to energy of radiation. Note that a portion of the preamplifier 21 may be included inside the radiation detector 2, and the other portion may be disposed outside the radiation detector 2.

Radiation is radiated from the radiation portion 36 to the sample 42, radiation such as fluorescent X-rays is generated in the sample 42, and the radiation detector 2 detects the radiation generated from the sample 42. Radiation is indicated by arrows in FIG. 4. Radiation is input to the radiation detection element 1, and the signal output electrode 13 outputs a current signal corresponding to energy of the radiation. The signal output by signal output electrode 13 is input to the preamplifier 21. The preamplifier 21 converts the current signal into a voltage signal and outputs a voltage signal proportional to the energy of the radiation. In this way, the radiation detector 2 outputs a signal having intensity corresponding to the energy of the detected radiation.

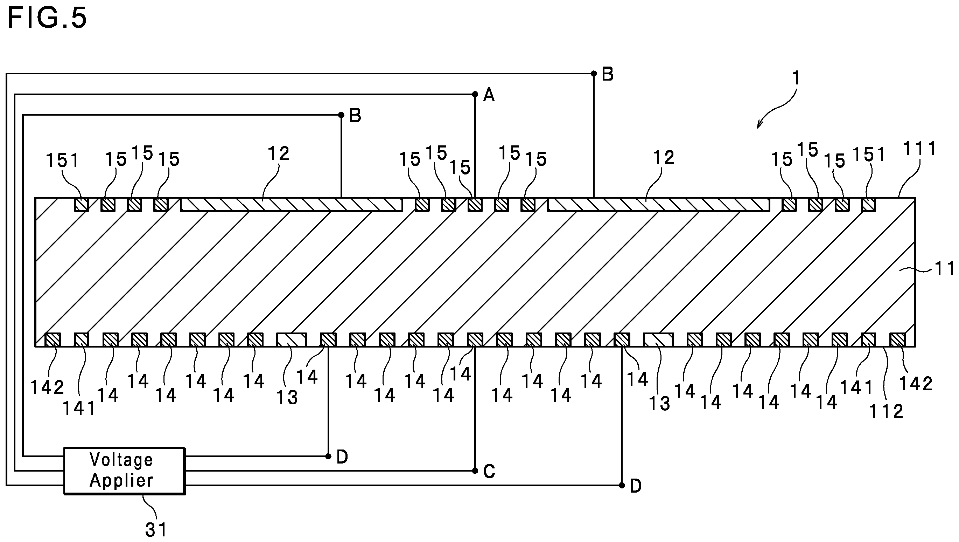

The voltage applier 31 is connected to the radiation detector 2. The voltage applier 31 is connected to the radiation detection element 1. FIG. 5 is a schematic diagram illustrating a connection mode between the radiation detection element 1 and the voltage applier 31 according to Embodiment 1. More specifically, the voltage applier 31 is connected to a counter electrode 12 and an outermost drift electrode 15 among a plurality of drift electrodes 15 surrounding the counter electrode 12. In addition, the voltage applier 31 is connected to an innermost curved electrode 14 (that is, a curved electrode 14 at a shortest distance from the signal output electrode 13) and an outermost curved electrode 14 among a plurality of curved electrodes 14 surrounding the signal output electrode 13.

The voltage applier 31 applies a voltage to the innermost curved electrode 14 and the outermost curved electrode 14 so that a potential of the innermost curved electrode 14 becomes high and a potential of the outermost curved electrode 14 becomes the lowest. In addition, the radiation detection element 1 is configured such that predetermined electrical resistance is generated between adjacent curved electrodes 14 that are different in distance from the signal output electrode 13. For example, an electrical resistance channel that connects two curved electrodes 14 is formed by adjusting a component of a part located between adjacent curved electrodes 14. That is, a plurality of curved electrodes 14 is connected in a daisy chain through electrical resistance.

When a voltage is applied, the respective curved electrodes 14 have potentials that monotonically increase in sequence from the outermost curved electrode 14 to the innermost curved electrode 14. That is, the potentials of the curved electrodes 14 increase in sequence from the outermost curved electrode 14 to the innermost curved electrode 14. Note that the plurality of curved electrodes 14 may include a pair of adjacent curved electrodes 14 having the same potential. The potentials of the plurality of curved electrodes 14 generate an electric field (potential gradient) in the semiconductor portion 11 so that a potential increases stepwise as a distance from the signal output electrode 13 decreases, and a potential decreases as the distance from the signal output electrode 13 increases.

Furthermore, the voltage applier 31 applies a voltage to the counter electrode 12 and the outermost drift electrode 15 so that the potential of the counter electrode 12 is high and the potential of the outermost drift electrode 15 is low. That is, a potential of point B illustrated in FIG. 5 is higher than a potential of point A. For example, a potential difference between point A and point B is 6 V to 20 V. The radiation detection element 1 is configured so that predetermined electrical resistance is generated between the counter electrode 12 and an innermost drift electrode 15 and between adjacent drift electrodes 15. That is, the plurality of drift electrodes 15 and the counter electrode 12 are electrically connected via electrical resistance. For example, an electrical resistance channel 152 connecting between the counter electrode 12 and the innermost drift electrode 15 and an electrical resistance channel 152 connecting between adjacent drift electrodes 15 are formed in the semiconductor portion 11. In FIG. 2, the electrical resistance channels 152 are indicated by dashed lines.

Application of voltage generates a potential that monotonically increases in sequence from an outer drift electrode 15 toward the counter electrode 12. That is, the potential increases in sequence from the outermost drift electrode 15 toward the counter electrode 12. Note that the plurality of drift electrodes 15 may include a pair of adjacent drift electrodes 15 having the same potential. Due to the potentials of the counter electrode 12 and the plurality of drift electrodes 15, an electric field is generated near the incident surface 111 in the semiconductor portion 11 so that a potential increases stepwise as a distance from the counter electrode 12 decreases, and a potential decreases as the distance from the counter electrode 12 increases.

The voltage applier 31 applies a voltage so that a potential of the drift electrode 15 is higher than a potential of the outermost curved electrode 14. In addition, the voltage applier 31 applies a voltage so that a potential of the counter electrode 12 is lower than a potential of the innermost curved electrode 14. That is, the potential of point A illustrated in FIG. 5 is higher than a potential of point C, the potential of point B is higher than the potential of point A, and a potential of point D is higher than the potential of point B. As a result, an electric field is generated inside the semiconductor portion 11 so that a potential increases as a distance from the signal output electrode 13 decreases. Electrons generated in response to incidence of radiation more easily move inside the semiconductor portion 11 toward the signal output electrode 13 due to the electric field. When the counter electrode 12 and the drift electrode 15 are connected to each other, and a voltage is applied between the counter electrode 12 and the drift electrode 15, a potential difference is generated between the counter electrode 12 and the drift electrode 15, and the potential difference is unlikely to become unstable even when the potential difference is increased. For this reason, by stably generating a large potential difference, it is possible to make it easier to gather electric charges to the signal output electrode 13. In addition, by providing a plurality of drift electrodes 15, it is possible to apply a higher voltage, more increase the potential difference, and make it easier to gather electric charges.

As illustrated in FIG. 4, a signal processor 32 that processes an output signal is further connected to the radiation detector 2. The signal processor 32 is connected to the preamplifier 21. When the preamplifier 21 outputs a signal, which causes the radiation detector 2 to output a signal having intensity according to energy of radiation. An analyzer 34 is connected to the signal processor 32. The analyzer 34 includes a calculation unit that performs calculation and a memory that stores data. The voltage applier 31, the signal processor 32, the analyzer 34, and the radiation portion 36 are connected to a controller 33. The controller 33 controls operations of the voltage applier 31, the signal processor 32, the analyzer 34, and the radiation portion 36.

The signal processor 32 receives a signal output by the radiation detector 2 and detects intensity of the signal, thereby detecting a signal value corresponding to energy of radiation detected by the radiation detector 2. The signal processor 32 counts a signal for each signal value and outputs data indicating a relationship between a signal value and a count number to the analyzer 34. The analyzer 34 receives data indicating the relationship between the signal value and the count number output by the signal processor 32. The analyzer 34 performs a process of generating a relationship between radiation energy and a count number, that is, a radiation spectrum, based on data from the signal processor 32. The analyzer 34 stores spectral data representing the radiation spectrum. The signal processor 32 may generate the radiation spectrum. The signal processor 32 and the analyzer 34 correspond to a spectrum generator.

The analyzer 34 performs qualitative or quantitative analysis of elements contained in the sample 42 based on the radiation spectrum. A display unit 35 such as a liquid crystal display is connected to the analyzer 34. The display unit 35 displays a spectrum generated by the analyzer 34 and an analysis result by the analyzer 34. A user can check a spectrum of radiation generated from the sample 42. The controller 33 may be configured to receive an operation from the user and control each unit of the radiation detection apparatus 100 in response to the received operation. Furthermore, the controller 33 and the analyzer 34 may be configured as the same computer.

The example illustrated in FIG. 4 is a configuration in which radiation is radiated onto the sample 42 and radiation generated from the sample 42 is detected. However, the radiation detection apparatus 100 may be configured to detect radiation transmitted through the sample 42 or radiation reflected by the sample 42. The radiation detection apparatus 100 may be configured to scan the sample using radiation by changing a direction of the radiation. The radiation detection apparatus 100 may be configured not to include the radiation portion 36, the analyzer 34, or the display unit 35.

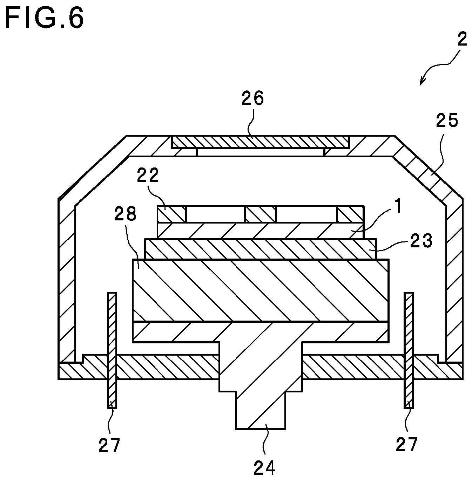

FIG. 6 is a schematic cross-sectional view illustrating a configuration example of the radiation detector 2 according to Embodiment 1. The radiation detector 2 is a silicon drift detector (SDD). The radiation detector 2 includes a housing 25 having a shape of a cylinder with a truncated cone connected to one end. The housing 25 is configured with a plate-shaped bottom plate covered with a cap-shaped cover. A window 26 made of a window material that transmits radiation is provided at a tip of the housing 25. The radiation detection element 1, a collimator 22, a substrate 23, a cooler 28, and a cold finger 24 are arranged inside the housing 25. The housing 25 accommodates the radiation detection element 1, the collimator 22, the substrate 23, and the cooler 28. The cooler 28 is, for example, a Peltier element.

The radiation detection element 1 is mounted on a surface of the substrate 23, and is disposed at a position facing the window 26. The radiation detection element 1 is disposed so that the electrode surface 112 faces the substrate 23, and the incident surface 111 faces the window 26. The collimator 22 is made of a material that shields radiation. The collimator 22 is disposed between the radiation detection element 1 and the window 26. One end of the collimator 22 faces the window 26, and the other end faces a surface of the radiation detection element 1. Radiation mainly passes through the window 26 and enters the inside of the housing 25, and the collimator 22 shields a part of the radiation. The radiation detection element 1 detects radiation that enters without being shielded by the collimator 22.

Wiring is formed on the substrate 23, and the preamplifier 21 is mounted thereon. The preamplifier 21 is omitted in FIG. 6. The substrate 23 is in thermal contact with a heat absorbing portion of the cooler 28 directly or via an intermediate material. A heat dissipating portion of the cooler 28 is in thermal contact with the cold finger 24. The cold finger 24 has a flat plate-shaped portion with which the heat dissipating portion of the cooler 28 is in thermal contact, and a portion that penetrates a bottom plate portion of the housing 25. Heat from the radiation detection element 1 is absorbed by the cooler 28 through the substrate 23, transferred from the cooler 28 to the cold finger 24, and dissipated to the outside of the radiation detector 2 through the cold finger 24.

The radiation detector 2 has a plurality of lead pins 27 penetrating the bottom plate portion of the housing 25. The lead pins 27 are connected to the substrate 23 using a method such as wire bonding. Application of a voltage to the radiation detection element 1 by the voltage applier 31 and output of a signal from the preamplifier 21 are performed through the lead pins 27.

Note that the radiation detector 2 may not include the cold finger 24, and the heat dissipating portion of the cooler 28 may be in thermal contact with the bottom plate portion of the housing 25. The radiation detector 2 may be configured not to include the cooler 28. The radiation detector 2 may be configured so that a portion of the housing 25 corresponding to the window 26 is open without including the window 26 made of a window material. Alternatively, the radiation detector 2 may be configured not to include the housing 25. The radiation detector 2 may further include other components.

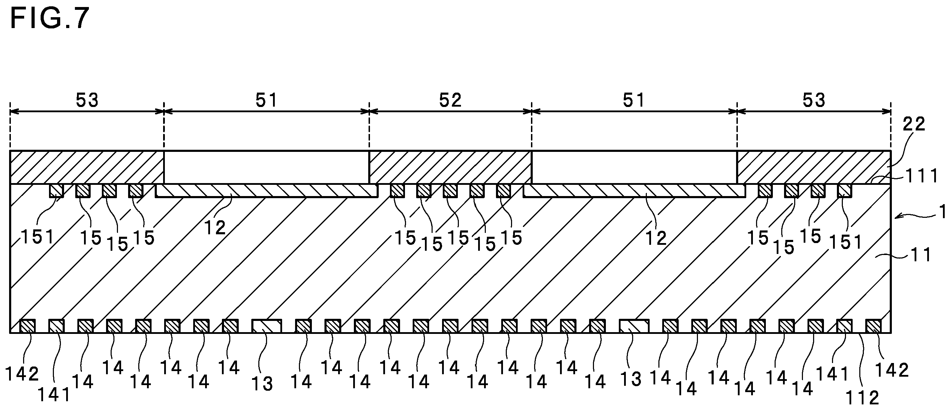

FIG. 7 is a schematic cross-sectional view illustrating an example of the radiation detection element 1 and the collimator 22 according to Embodiment 1. The incident surface 111 of the radiation detection element 1 is divided into a sensitive region 51 capable of detecting radiation, a boundary region 52 located between a plurality of sensitive regions 51, and a peripheral region 53. The incident surface 111 includes the plurality of sensitive regions 51. The plurality of sensitive regions 51 are spaced apart from one another. The sensitive regions 51 are in one-to-one correspondence with the counter electrodes 12. The sensitive region 51 includes a center of the counter electrode 12 and includes most of the counter electrode 12 excluding a peripheral part of the counter electrode 12. Parts of the incident surface 111 other than the counter electrodes 12 are not included in the sensitive regions 51.

The boundary region 52 includes a portion located between the plurality of counter electrodes 12 in the incident surface 111. That is, the boundary region 52 includes a plurality of drift electrodes 15 located between the plurality of counter electrodes 12. In addition, the boundary region 52 includes a portion of the peripheral part of the counter electrode 12. When radiation is incident on the sensitive region 51, generated electrons are gathered at a nearest signal output electrode 13, and the radiation is detected. When radiation is incident near the drift electrode 15 included in the boundary region 52, generated electrons tend to remain between the plurality of drift electrodes 15, making it difficult for the electrons to gather at the signal output electrode 13. For example, it takes longer for the electrons to gather at the signal output electrode 13, increasing a time required for signal processing. For example, some of the generated electrons do not gather at the signal output electrode 13, making detected radiation energy inaccurate. In this way, when radiation is incident on the boundary region 52, radiation detection accuracy deteriorates.

The peripheral region 53 is located in a peripheral part of the incident surface 111, and includes a portion located between an edge of the radiation detection element 1 and the counter electrode 12 in the incident surface 111. That is, the peripheral region 53 includes the guard electrode 151, and a plurality of drift electrodes 15 located between the counter electrode 12 and the edge of the radiation detection element 1. In addition, the peripheral region 53 includes a part of the peripheral part of the counter electrode 12. Even when radiation is incident on the peripheral region 53, electrons are less likely to gather at the signal output electrode 13, as in the case where radiation is incident on the boundary region 52. For this reason, radiation detection accuracy deteriorates.

The collimator 22 is configured to cover the boundary region 52 and the peripheral region 53 but not to cover the sensitive region 51. That is, the guard electrode 151 and the drift electrode 15 are covered by the collimator 22. A portion where no electrode is provided in the incident surface 111 is also covered by the collimator 22. The collimator 22 shields radiation and prevents radiation from being incident on the boundary region 52 and the peripheral region 53. Radiation not shielded by the collimator 22 is incident on the sensitive region 51.

In the incident surface 111, radiation is not incident on the boundary region 52 and the peripheral region 53 since the collimator 22 shields radiation. When radiation is incident on the boundary region 52 or the peripheral region 53, as described above, generated electrons are less likely to gather at the signal output electrode 13, and radiation detection accuracy deteriorates. In this embodiment, the collimator 22 prevents radiation from being incident on the boundary region 52 and the peripheral region 53, so that electrons generated by radiation do not become less likely to gather at the signal output electrode 13, and deterioration of radiation detection accuracy is prevented. Furthermore, radiation that is non-perpendicular to the incident surface 111 may be incident on a portion of the semiconductor portion 11 located below the boundary region 52 and near a periphery of the counter electrode 12, and on a portion of the semiconductor portion 11 located below the peripheral region 53 and near a periphery of the counter electrode 12. Electrons generated by radiation in this portion are gathered at the signal output electrode 13 by an electric field.

As described above, an electric field is generated near the incident surface 111 in the semiconductor portion 11 so that a potential increases from the outer drift electrode 15 toward the counter electrode 12. Electrons generated near the periphery of the counter electrode 12 due to incidence of radiation are moved by the generated electric field to near the center of the counter electrode 12. The electrons moving to near the center of the counter electrode 12 are caused to flow into the signal output electrode 13 by the electric field in the semiconductor portion 11. For this reason, when compared to a conventional radiation detection element not provided with the drift electrode 15, the electrons generated near the periphery of the counter electrode 12 are more likely to gather at the signal output electrode 13. In this embodiment, the generated electrons can be easily gathered at the signal output electrode 13 even at a position where electrons generated by radiation could not easily be gathered at the signal output electrode 13 in the past. Using a plurality of drift electrodes 15 makes it possible to increase a potential difference between the outer drift electrodes 15 and the counter electrode 12. For this reason, the electrons can move more easily toward the center of the counter electrode 12 and flow more easily into the signal output electrode 13.

Therefore, in this embodiment, a portion that could not be used as the sensitive region 51 in the past can be used as the sensitive region 51. That is, the sensitive region 51 can be made larger than that in the past. For example, the sensitive region 51 extends to a position closer to the edge of the counter electrode 12 than in the past. As the sensitive region 51 becomes larger, the boundary region 52 and the peripheral region 53 become smaller. As the boundary region 52 and the peripheral region 53 become smaller, the size of the portion of the collimator 22 covering the boundary region 52 and the peripheral region 53 can be reduced.

As described above, in this embodiment, the sensitive region 51 of the radiation detection element 1 becomes larger than in the past. When the sensitive region 51 becomes larger, a proportion of radiation that can be detected using the radiation detection element 1 increases. By increasing the proportion of detectable radiation, efficiency of radiation detection using the radiation detection element 1 is improved. By improving efficiency of radiation detection, the radiation detection apparatus 100 can detect radiation with higher accuracy than in the past.

This embodiment illustrates a mode in which the radiation detection element 1 has four sets of the counter electrode 12, the plurality of drift electrodes 15, the signal output electrode 13, and the plurality of curved electrodes 14. However, the number of sets included in the radiation detection element 1 may be any number other than four. Because the radiation detection element 1 has a plurality of sets of the counter electrode 12, the plurality of drift electrodes 15, the signal output electrode 13, and the plurality of curved electrodes 14, the radiation detection apparatus 100 can detect radiation at a high counting rate. The plurality of sets of the counter electrode 12, the plurality of drift electrodes 15, the signal output electrode 13, and the plurality of curved electrodes 14 may be arranged in a shape other than a two-dimensional shape, such as a linear shape.

### <Embodiment 2>

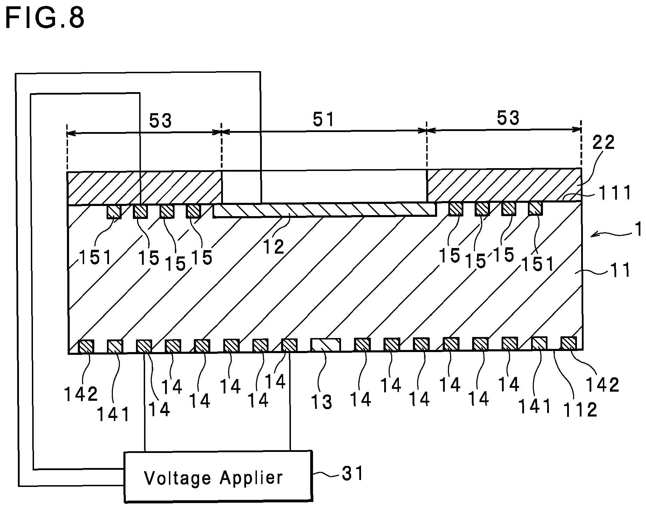

FIG. 8 is a schematic cross-sectional view illustrating an example of a radiation detection element 1 and a collimator 22 according to Embodiment 2 and a connection mode of the radiation detection element 1 and a voltage applier 31. A configuration of a radiation detection apparatus 100 other than the radiation detection element 1 and the collimator 22 is the same as that of the embodiment 1. A single signal output electrode 13 and a plurality of curved electrodes 14 surrounding the signal output electrode 13 are provided on the electrode surface 112. For example, the signal output electrode 13 is disposed in a center of the electrode surface 112. In addition, a guard electrode 141 and a ground electrode 142 are provided at positions surrounding the plurality of curved electrodes 14.

The incident surface 111 is provided with a single counter electrode 12 and a plurality of drift electrodes 15 surrounding the counter electrode 12. The counter electrode 12 is disposed at a position on a rear side of the signal output electrode 13. The counter electrode 12 is disposed at a position including a center of the incident surface 111. In addition, a guard electrode 151 is provided at a position surrounding the plurality of drift electrodes 15. The incident surface 111 does not include the boundary region 52. The collimator 22 is configured to cover the peripheral region 53 and not to cover the sensitive region 51.

Similarly to Embodiment 1, the voltage applier 31 applies a voltage to the curved electrodes 14 so that the innermost curved electrode 14 has a high potential and the outermost curved electrode 14 has a low potential. In addition, the voltage applier 31 applies a voltage to the counter electrode 12 and the drift electrode 15 so that the counter electrode 12 has a high potential and the outermost drift electrode 15 has a low potential.

In Embodiment 2, an electric field is generated near the incident surface 111 in the semiconductor portion 11 so that a potential increases from the outer drift electrode 15 toward the counter electrode 12. When compared to a conventional radiation detection element not provided with the drift electrode 15, electrons generated near the periphery of the counter electrode 12 are more likely to gather at the signal output electrode 13. The sensitive region 51 can be made larger than in the past. When the sensitive region 51 becomes larger, efficiency of radiation detection is improved. The radiation detection apparatus 100 can detect radiation with higher accuracy than in the past.

Embodiments 1 and 2 illustrate a configuration in which a semiconductor included in the radiation detection element 1 is Si. However, it is possible to employ a configuration in which the radiation detection element 1 is made of a semiconductor other than Si. Embodiments 1 and 2 illustrate a configuration in which the semiconductor portion 11 is made of an n-type semiconductor, and the counter electrode 12 and the curved electrode 14 are made of a p-type semiconductor. However, the radiation detection element 1 may be configured so that the semiconductor portion 11 is made of a p-type semiconductor, and the counter electrode 12 and the curved electrode 14 are made of an n-type semiconductor. In this configuration, a level of the electric potential is reversed from that in the examples illustrated in Embodiments 1 and 2, holes generated by incidence of radiation flow into the signal output electrode 13, and radiation is detected. Embodiments 1 and 2 illustrate a configuration in which the radiation detection element 1 is a silicon drift type radiation detection element. However, the radiation detection element 1 may be a semiconductor element other than the silicon drift type radiation detection element. For this reason, the radiation detector 2 may be a radiation detector other than an SDD.

The invention is not limited to content of the above-described embodiments, and various modifications are possible within the scope of the claims. In other words, embodiments obtained by combining technical means appropriately modified within the scope of the claims are also included in the technical scope of the invention.

The items described in each embodiment can be combined with each other. In addition, the independent claims and dependent claims described in the claims can be combined with each other in any and all combinations regardless of the citation format. Furthermore, the claims use a format in which a claim cites two or more other claims (multi-claim format). However, the invention is not limited thereto. A multi-claim that cites at least one multi-claim (multi-multi claim) may be used.

The embodiments disclosed herein are illustrative in all respects and should not be considered to be restrictive. The scope of the invention is defined by the claims, not by the above meaning, and is intended to include all modifications within the scope and meaning equivalent to the claims.

### Reference Signs List

- 100: radiation detection apparatus
- 1: radiation detection element
- 11: semiconductor portion
- 111: incident surface
- 12: counter electrode (second electrode)
- 13: signal output electrode (first electrode)
- 14: curved electrode (fourth electrode)
- 15: drift electrode (third electrode)
- 2: radiation detector
- 22: collimator
- 32: signal processor (spectrum generator)
- 34: analyzer (spectrum generator)
- 35: display unit
- 36: radiation portion
- 42: sample

## Claims

1. A radiation detection element including a semiconductor portion having an incident surface onto which radiation is incident, a first electrode which is provided on a rear surface of the incident surface and into which electric charges generated in the semiconductor portion by incidence of radiation flow, and a second electrode provided on the incident surface, located on a rear side of the first electrode, and being applied a voltage required for causing the electric charges to flow into the first electrode, **characterized by** comprising:
a third electrode provided on the incident surface and disposed at a position surrounding the second electrode, wherein
the third electrode is electrically connected to the second electrode, and
a voltage is applied to the second electrode and the third electrode so that a potential changes from the third electrode to the second electrode.

2. The radiation detection element according to claim 1, **characterized in that**
a plurality of third electrodes is provided,
the plurality of third electrodes is electrically connected to each other and are spaced from the second electrode at mutually different distances, and
a voltage is applied to the second electrode and the plurality of third electrodes so that a potential monotonically changes from an outermost third electrode among the plurality of third electrodes toward the second electrode.

3. The radiation detection element according to claim 1 or 2, **characterized in that**
a plurality of sets of the second electrode and the third electrode is provided, and
the plurality of sets of the second electrode and the third electrode is two-dimensionally arranged.

4. The radiation detection element according to any one of claims 1 to 3, **characterized by** further comprising
a plurality of fourth electrodes provided on the rear surface of the incident surface, disposed at positions surrounding the first electrode, and spaced at mutually different distances from the first electrode, wherein
a voltage is applied to the plurality of fourth electrodes so that a potential monotonically increases from an outermost fourth electrode to an innermost fourth electrode, and
a voltage is applied to the second electrode and the third electrode so that potentials of the second electrode and the third electrode are higher than a potential of the outermost fourth electrode and lower than a potential of the innermost fourth electrode.

5. A radiation detector, **characterized by** comprising:
the radiation detection element according to any one of claims 1 to 4; and
a collimator configured to shield radiation,
wherein the collimator is disposed to cover a third electrode included in the radiation detection element and not to cover at least a part of a second electrode included in the radiation detection element.

6. A radiation detection apparatus, **characterized by** comprising:
a radiation portion configured to radiate radiation onto a sample;
the radiation detector according to claim 5;
a spectrum generator configured to generate a spectrum of radiation detected by the radiation detector; and
a display unit configured to display a spectrum generated by the spectrum generator.
